# DEMANDE DE BREVET EUROPEEN

(11) **EP 0 553 045 A1**
(43) Date de publication de la demande: **28.07.1993**
(21) Numéro de dépôt: 93420038.7
(22) Date de dépôt: 25.01.1993
(51) Int. Cl.: G05B 19/04, G05B 19/10, G05B 19/12

(54) **Procédé et circuit universel de commande pour traiter des produits codés, par l'intermédiaire de divers appareils éléctroménagers et appareil en faisant application**

(30) Priorité: 24.01.1992 FR 9200973
(71) Demandeur: SEB S.A., F-69130 Ecully (FR)
(72) Inventeur: Bouly, Bernard, F-21000 Dijon (FR)

(57) **Abrégé**

- Le procédé selon l'invention est destiné à permettre le traitement de produits (3) par l'intermédiaire de divers appareils électroménagers appartenant à une famille. Le procédé consiste :
   . à attribuer, à chaque appareil électroménager (1) faisant partie d'une famille, un coefficient de pondération (Kp) pour chacun des paramètres de traitement,
   . à sélectionner un appareil donné (1) pour assurer le traitement du produit (3) considéré,
   . à lire le code (6) correspondant eu produit (3),
   . à sélectionner chaque coefficient de pondération (Kp) correspondant au paramètre (p) de traitement envisagé et à l'appareil utilisé (1),
   . et à commander chaque agent de traitement (2) par l'intermédiaire de signaux correspondant à la ou aux valeurs du paramètre correspondant, modifiées par le coefficient de pondération correspondant (Kp).

## Description

La présente invention concerne le domaine technique général des appareils relevant principalement de l'éléctroménager et conçus pour assurer la réalisation d'un traitement, au sens général, à l'aide d'un ou de plusieurs agents, en général physiques, agissant sur des produits selon un cycle donné de traitement qui est enregistré sous la forme d'un code.

L'invention vise, plus particulièrement, les appareils éléctroménagers, tels que par exemple les fours de cuisson, les sèche-cheveux, les fers à repasser ou les machines à café, destinés à agir sur les produits spécifiques à chaque type d'appareil, tels que respectivement sur des produits alimentaires, des cheveux, des pièces de linge ou du café. Chaque catégorie d'appareil comporte un ou plusieurs agents de traitement se présentant, par exemple, sous la forme de résistances électriques (moyens de chauffage) ou de moyens de génération, de pression, de vapeur, d'air ou d'eau. La puissance, le niveau, la vitesse de rotation, la durée et/ou le débit de tels agents sont commandés selon un cycle de traitement évoluant généralement dans le temps.

L'utilisation de tels appareils éléctroménagers a fait naître le besoin de pouvoir disposer de moyens techniques de réglage et/ou de programmation pour les divers paramètres de traitement disponibles sur ces appareils, en vue de faciliter leur utilisation tout en offrant l'avantage de pouvoir disposer de moyens techniques de réglage et/ou de programmation pour les divers paramètres de traitement disponibles sur ces appareils, en vue de faciliter leur utilisation tout en offrant l'avantage de pouvoir disposer, après traitement, d'un produit présentant toutes les caractéristiques souhaitées.

Pour tenter de satisfaire ce besoin, le brevet US-A-4 837 414 a proposé la réalisation d'un four comportant, notamment, un dipositif assurant la lecture de codes à barres constituant chacun un numéro d'identification d'une recette d'un plat culinaire. Le four est accompagné d'un livret de cuisine consignant des recettes affectées chacune de leur code d'identification. A chaque code correspond un programme de cuisson approprié qui est préalablement enregistré dans une mémoire intégrée au four. Après la lecture d'un code affecté à une recette choisie, une unité de contrôle du four sélectionne le programme de cuisson correspondant au numéro codé de la recette. Le programme de cuisson est traduit par l'unité de contrôle pour délivrer des signaux de commande destinés à piloter les résistances électriques du four selon le cycle thermique de traitement prévu.

Manifestement, un tel four offre l'avantage à son utilisateur de pouvoir être réglé facilement et correctement en vue de réussir, sans faille, la cuisson de plats culinaires consignés dans un livre de cuisine. L'usage d'un tel four conduit, néanmoins, à observer les inconvénients suivants.

Il doit être noté que le four décrit par l'art antérieur concerne un four du type à énergie micro-ondes combiné à une chaleur de convection. L'unité de contrôle équipant un tel four ne peut, en aucun cas être installée sur un autre type de four, par exemple à chaleur tournante ou à énergie micro-ondes seule, dans la mesure ou les performances de cuisson sont différentes d'un type de four à l'autre. L'installation d'une telle unité de commande sur les divers types de four conduit à obtenir, pour un même programme de cuisson, un produit différemment traité.

Dans le même sens, l'expérience montre que les modèles de fours relevant d'un type identique, mais provenant par exemple, de divers fabricants, présentent des performances techniques différentes d'un modèle à l'autre. Il s'ensuit que les traitements effectués sur les produits, à partir d'un programme de cuisson donné, varient d'un modèle à l'autre.

Par ailleurs, il est clair que l'unité de contrôle décrite dans le document antérieur est uniquement destinée et conçue pour être installée sur une catégorie d'appareils électroménagers, à savoir les fours de cuisson.

L'objet de l'invention vise donc à remédier aux inconvénients énoncés ci-dessus en proposant un procédé adapté pour permettre de traiter un produit selon des caractéristiques précises correspondant à un code, quel que soit l'appareil utilisé dans une famille donnée d'appareils électroménagers mettant en oeuvre le procédé selon l'invention.

Pour atteindre cet objectif, le procédé selon l'invention consiste :
- à attribuer, à chaque appareil électroménager faisant partie d'une famille, un coefficient de pondération pour chacun des paramètres de traitement, chaque coefficient étant déterminé pour pondérer les valeurs du paramètre correspondant, en fonction des caractéristiques techniques des agents de traitement spécifiques à l'appareil,
- à sélectionner un appareil donné pour assurer le traitement du produit considéré,
- à lire le code correspondant au produit, en vue de permettre la détermination du ou des paramètres envisagés pour le produit,
- à sélectionner chaque coefficient de pondération correspondant au paramètre de traitement envisagé et à l'appareil utilisé,
- et à commander chaque agent de traitement par l'intermédiaire de signaux correspondant à la ou aux valeurs du paramètre correspondant, modifiées par le coefficient de pondération correspondant.

Un autre objet de l'invention vise à offrir un circuit universel de commande destiné à équiper des appareils ménagers relevant de catégories différentes ou non, d'un type unique ou non et/ou de modèles différents, de manière à obtenir des produits traités correspondant aux caractéristiques précises souhaitées relevant d'un code.

Pour atteindre cet objectif, le circuit universel de commande comporte :
- des moyens de mémorisation du ou des coefficients de pondération attribués à au moins un appareil,
- des moyens de sélection du coefficient de pondération correspondant à chaque paramètre codé et attribué à l'appareil équipé d'un tel circuit,
- et des moyens de conversion permettant de pondérer chaque paramètre codé par le coefficient correspondant.

Diverses autres caractéristiques ressortent de la description faite ci-dessous en référence aux dessins annexés qui montrent, à titre d'exemples non limitatifs, des formes de réalisation de l'objet de l'invention.

La Figure 1 est un schéma bloc fonctionnel d'un appareil de traitement conçu pour mettre en oeuvre le procédé conforme à l'invention.

La Figure 2 montre un tableau explicitant le principe des coefficients de pondération selon l'invention.

La Figure 3 illustre un exemple de configuration d'une unité de commande associée à un appareil de traitement selon l'invention.

La Figure 4 est une autre vue d'un exemple de réalisation d'une unité de traitement équipant un appareil éléctroménager selon l'invention.

La Figure 5 décrit un organigramme permettant la mise en oeuvre du procédé selon l'invention.

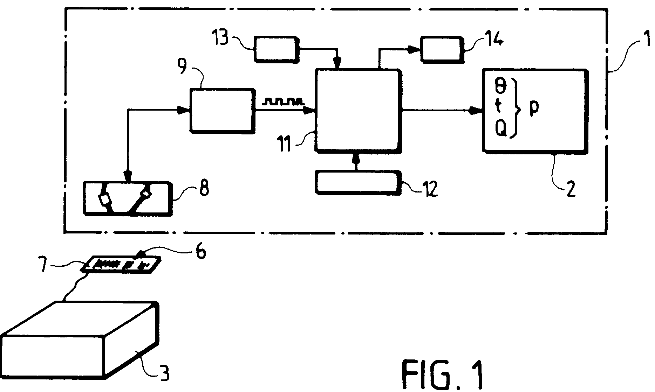

La Figure 1 illustre un appareil éléctroménager 1 conçu pour assurer, par l'intermédiaire d'agents 2, un traitement au sens général sur un produit 3. A titre d'exemple, l'appareil de traitement 1 peut appartenir à la catégorie des fours de cuisson, des fers à repasser, des appareils sèche-cheveux ou des cafetières. Pour chaque application ou catégorie énoncée ci-dessus à titre d'exemple, le produit 3 constitue respectivement un plat culinaire, un linge ou un vêtement, des cheveux ou du café. Chaque appareil 1 est apte à assurer le traitement d'un produit correspondant par l'intermédiaire d'agents de traitement 2, formés classiquement par des résistances chauffantes ou des moyens de génération de vapeur ou d'air. De tels agents 2 sont commandés à des valeurs données, selon un cycle temporel défini. Les agents 2 agissent sur des paramètres de traitement "p" auxquels le produit doit être soumis. A titre d'exemple, ces paramètres "p" relèvent d'une température "0", d'un temps "t" et d'un débit "Q" d'eau ou d'air.

Le cycle de traitement, qui définit la ou les valeurs d'un ou des paramètres de traitement p, est lié à la nature ou aux caractéristiques intrinsèques du produit et prennent en compte les qualités souhaitées et devant être présentées par le produit après son traitement. A titre d'exemple, pour une application concernant un four de cuisson, la détermination des paramètres peut revenir à définir, pour chaque produit, le cycle thermique de cuisson qui donne l'évolution de la température de cuisson en fonction du temps. Pour une application relevant du soin du linge, les paramètres de traitement p choisis peuvent correspondre à la température et/ou au débit de vapeur nécessaires pour traiter chaque produit en tenant compte du matériau le constituant.

D'une manière classique, le traitement d'un produit 3 par un appareil 1 correspondant consiste à lire un code 6 enregistré sur un support 7, de manière à permettre la mise en oeuvre ou la reconstitution du ou des paramètres de traitement envisagés. D'une manière générale, le code 6 présente un format à n informations. Le code 6 peut constituer un numéro d'identification correspondant à un programme de traitement enregistré dans une mémoire installée dans l'appareil 1. De préférence, le code 6 représente le cycle de traitement destiné à être appliqué à un produit 3 et constitue un code à barres.

La lecture d'un code 6 affecté au produit s'effectue par l'intermédiaire d'un bloc 8 de nature optique, dans le cas d'un code à barres, intégré ou non à l'appareil de traitement 1. Le bloc 8 est relié à un circuit 9 de décodage et de mise en forme du signal reçu. le circuit 9 est relié en sortie à un circuit de traitement, de conversion et de commande 11 délivrant en sortie des signaux de commande pour piloter les agents de traitement 2. D'une manière classique, le circuit de commande 11, qui est relié à une alimentation 12, est apte à recevoir des ordres de commande touches manuelles 13 et à délivrer des signaux sonores et/ou de visualisation par des moyens correspondants 14.

Selon l'objet de l'invention, il est prévu un procédé visant à autoriser le traitement d'un produit 3 par l'intermédiaire d'un appareil 1, appartenant à une famille d'appareils éléctroménagers. Les appareils 1 de cette famille sont configurés pour mettre en oeuvre le procédé selon l'invention et permettent d'obtenir un produit 3 traité selon les caractéristiques correspondant à la lecture du code 6. Cette famille peut comporter des appareils relevant d'une ou de plusieurs catégories d'appareils éléctroménagers. A titre d'exemple, une catégorie d'appareils éléctroménagers peut correspondre par exemple, à des fours de cuisson, des fers à repasser, des appareils sèche-cheveux ou des cafetières. Pour une même catégorie d'appareils éléctroménagers, il peut être prévu de disposer de plusieurs types a d'appareils. Ainsi, pour la catégorie concernant les fours de cuisson, divers types sont connus, tels que, par exemple, les fours à énergie micro-ondes, les fours à chaleur tournante ou les fours combinant une énergie micro-ondes et une chaleur tournante. Par ailleurs, chaque type d'appareil peut comporter plusieurs modèles provenant d'un même fabricant ou non.

En résumé, il doit être considéré qu'une famille d'appareils électroménagers au sens de l'invention regroupe l'ensemble des appareils électroménagers mettant en oeuvre le procédé selon l'invention. Les appareils de cette famille font partie d'au moins une catégorie pour laquelle un ou plusieurs types d'appareils sont disponibles, un type d'appareil étant susceptible d'être fabriqué sous la forme d'un et, en général, de divers modèles provenant d'un ou différents constructeurs.

Selon l'invention, chaque appareil électroménager 1 appartenant à une telle famille est affecté d'un coefficient de pondération Kp pour chacun des paramètres de traitement p, susceptibles d'être mis en oeuvre par l'appareil. Pour une même catégorie d'appareils, ces coefficients permettent, à partir d'un cycle de traitement donné, d'obtenir un traitement identique quel que soit le type et/ou le modèle d'appareil utilisé dans cette catégorie, même si les performances techniques varient d'un type ou d'un modèle à l'autre.

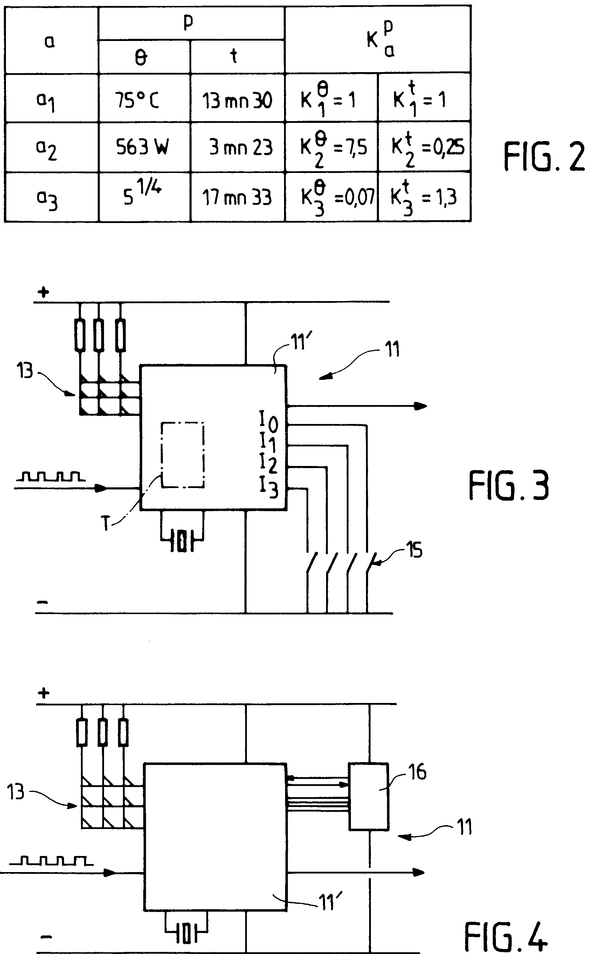

La Figure 2 illustre, à titre d'exemple, la mise en oeuvre des coefficients de pondération Kpa pour une application visant la catégorie de fours de cuisson comportant trois types a de fours. Le type a1 de four correspond à un four combinant une énergie micro-onde et une chaleur tournante. Il est considéré qu'un tel four a1 doit traiter un produit 3 à une température 0 de 75° pendant une durée t de 13 mn 20. A ce type de four a1, qui constitue l'élément de référence, il est affecté un coefficient K01 égal à 1 et un coefficient KT1 aussi égal à 1.

Si, par exemple, le type a2 d'appareil constitue un four à micro-ondes, il est à noter que le produit doit être soumis à une puissance de de 563 W pendant une durée de 3 mm 23, en vue d'aboutir à un traitement similaire à celui obtenu avec le type a1. Pour atteindre un tel objectif, le coefficient de pondération K02 est égal à 7,5, tandis que le coefficient Kt2 est égal à 0,25.

Si le type a3 d'appareil est un four à chaleur tournante, le produit 3 doit être soumis à une puissance correspondant à un thermostat placé sur la position 5 1/4 pendant une durée de 17 mm 33, afin d'obtenir un produit présentant des caractéristiques de traitement similaires à celles obtenues avec le type a1 et a2. Le coefficient de pondération de température K03 est égal à 0,07, tandis que le coefficient de pondération temporel Kt3 est égal à 1,3.

Bien entendu, il peut être prévu de définir des coefficients de pondération Kp pour d' autres types de four ou pour des fours appartenant à un même type mais relevant de modèles différents commercialisés sous une marque identique ou non. Dans ce dernier cas, la mise en oeuvre des coefficients de pondération permet de compenser les écarts apparaissant entre les modèles, notamment au niveau de la puissance réelle restituée et agissant directement sur le produit.

Le procédé selon l'invention vise à sélectionner, en fonction de l'appareil de traitement utilisé, le coefficient de pondération Kp correspondant à chaque paramètre codé p mis en oeuvre. La ou les valeurs du ou des paramètres codés p sont modifiées par le coefficient de pondération correspondant, de manière à obtenir des signaux de commande des agents de traitement qui tiennent compte des caractéristiques ou des performances techniques spécifiques de l'appareil utilisé.

Dans l'exemple de réalisation illustré à la Figure 3, les coefficients de pondération Kp sont enregistrés dans une table de conversion T mémorisée avantageusement dans un microprocesseur 11' faisant partie du circuit de commande 11. La sélection des coefficients de pondération Kp des agents 2 équipant l'appareil dans lequel le microprocesseur est monté, s'effectue par l'intermédiaire de moyens d'affectation 15 de l'état d'une série, par exemple égale à quatre, d'entrées ou de broches I0 à I3 du microprocesseur. Les entrées I0-I3 sontplacés dans un état donné pour former ensemble une combinaison d'adressage des coefficients correspondant à l'appareil. A titre d'exemple, les entreés I0 à I3 du mircoprocesseur peuvent être placées à l'état logique 0, de manière que la combinaison ainsi formée corresponde à la sélection des coefficients de pondération KP1 pour l'appareil dans lequel le microprocesseur est monté. Si un tel microprocesseur doit équiper un appareil du type a2, il peut être prévu de placer, par exemple, l'entrée I0 à une valeur logique 1 et les entrées I1 à I3 à des valeurs logiques 0, de manière que la combinaison ainsi formée permette la sélection des coefficients de pondération Kp2.

Ainsi, il peut être prévu de réaliser un circuit universel de commande 11 capable d'équiper différents appareils appartenant à la famille d'appareils au sens de l'invention. Lors du montage d'un tel circuit de commande 11 dans un appareil, les entrées I du microprocesseur 11' sont placées dans une position donnée correspondant à la sélection des coefficients de pondération de l'appareil. Bien entendu, si de nouveaux coefficients de pondération doivent être enregistrés dans la table pour tenir compte de l'apparition de nouveaux appareils électroménagers, il pourra être prévu de rajouter de telles données dans la table de conversion, afin de continuer de rendre universelle l'utilisation d'un tel circuit de commande.

La Figure 4 illustre une autre variante de réalisation pour sélectionner les coefficients de pondération affectés à l'appareil utilisé. Selon ce procédé, il est prévu de mettre en oeuvre un circuit de commande 11 comportant un microprocesseur 11' relié à une mémoire 16 contenant les coefficients de pondération correspondant à l'appareil dans lequel elle est montée. Selon ce procédé, il est prévu d'utiliser un même microprocesseur 11' pour tous les appareils de la famille et un type de mémoire programmée 16 pour chaque type ou modèle d'appareil.

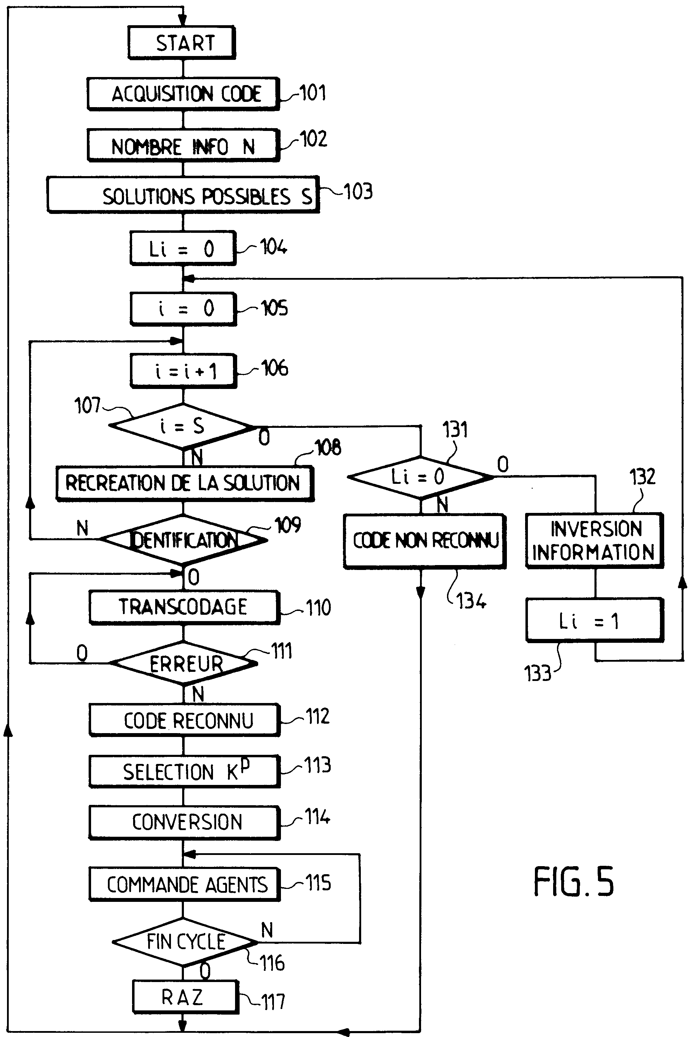

La Figure 5 illustre, de manière détaillée sous la forme d'un organigramme, le déroulement d'une opération destinée à assurer le traitement d'un produit 3 par un appareil électroménager 1. Bien entendu, avant la lecture d'un code affecté au produit, l'appareil 1 utilisé est configuré pour intégrer au moins ses propres coefficients de pondération Kp, enregistrés, soit dans un mémoire programmée 16 reliée au microprocesseur, soit à l'intérieur d'une table T mémorisée dans le microprocesseur dont certaines de ses entrées I ont été placées par câblage pour former une combinaison correspondant aux coefficients de pondération spécifiques de l'appareil.

Le traitement d'un produit 3 par l'appareil 1 commence par une phase 101 d'acquisition de données au cours de laquelle le bloc optique 8 assure la lecture du code 6 dont le format est de n informations correspondant à des traits et à des intervalles séparant deux traits consécutifs. Après l'acquisition des données, il est prévu lors d'une phase 102, de procéder au comptage du nombre N des informations lues. D'une manière générale, il est à considérer que le nombre N d'informations lues est supérieur au nombre n d'informations codées dans la mesure où sont également enregistrées, lors de la phase de lecture, des informations parasites. Lors d'une phase 103, il est prévu de déterminer le nombre S de solutions possibles pour retrouver, parmi les N informations lues, le code de format n. D'une manière générale, le nombre de solutions S est égal à N - n + 1. A titre d'exemple, si le code à barres enregistré réellement sur le support contient 13 informations, alors que l'acquisition aboutit à l'obtention de 16 informations, il doit être considéré qu'il existe 4 solutions possibles pour retrouver le bon code. Ainsi, le code à retrouver correspond aux informations apparaîssant aux rangs, soit 1 à 13, 2 à 14, 3 à 15 ou 4 à 16.

Après une phase 104 de mise à l'état 0 d'un compteur Li de lecture inverse et une phase 105 de mise à 0 d'un compteur i, il est procédé à une étape 106 au cours de laquelle le compteur i qui est incrémenté de 1 à chaque passage, comptabilise le rang de la solution de code envisagée. Si après une opération de test 107, le compteur i n'est pas égal au nombre maximum de solutions S, la solution considérée est recréée lors d'une phase 108. La solution de code ainsi recréée est comparée au cours d'une étape 109 pour déterminer si elle comporte les éléments d'identification, notamment de début et de fin de code, normalement, attribués aux codes à barres. Dans la négative, un retour à l'étape 106 est effectué, de manière à décaler la sélection parmi les N informations lues de n informations d'un pas égal à une information. Un tel processus de décalage est renouvelé tant que le compteur i n'atteint pas S. Lorsque le compteur i est égal au nombre S, il est prévu de procéder, lors d'une phase 131, à un test pour déterminer si le compteur de lecture inverse Li est égal à 0. Dans l'affirmative, il est prévu de procéder, lors d'une étape 132, à une inversion de l'ordre des informations lues N. Un retour à la phase 105 est ensuite effectué après la mise à l'état 1 du compteur Li lors d'une étape 133.

Si la scrutation des différentes solutions possibles dans l'ordre inverse des données n'a pas permis de retrouver le bon code au terme des S solutions possibles (étape 107), une étape 134 signale que le code n'a pas été reconnu.

Lorsque la solution de code proposé comporte les éléments d'identification (étape 109), un transcodage du code est effectué en binaire, lors d'une étape 110. Un test est ensuite effectué lors d'une phase 111 pour déterminer si le transcodage effectué est correct. Si une erreur de transcodage est décelée, une nouvelle opération de transcodage (phase 110) est effectuée. Si le transcodage est correct, la phase 112 permet de reconnaître un code dont les informations sont aptes à être reçues par l'appareil de traitement utilisé.

Un étape 113 permet de sélectionner le ou les coefficients de pondération Kp associés aux paramètre codés et correspondant à l'appareil de traitement utilisé. Une telle phase consiste donc, soit à lire les données d'une mémoire raccordée au microprocesseur, soit à scruter les entrées I du microprocesseur pour choisir les coefficients de pondération affectés à l'appareil utilisé. Au cours d'une phase 114, les valeurs des paramètres apparaîssant dans le code sont pondérées chacune par le coefficient sélectionné correspondant. Les nouvelles valeurs calculées donnent lieu à l'émission par le microprocesseur, de signaux de commande destinés à piloter, lors d'une phase 115, les différents agents de traitement. La commande des agents de traitement est réalisée tant que le cycle de traitement codé n'est pas terminé ou interrompu manuellement (phase 116). Lorsque le cycle de traitement prévu est réalisé, les divers éléments constitutifs de l'appareil sont remis, lors d'une phase 117, dans une position initiale pour autoriser l'acquisition ultérieure d'un nouveau code, en vue du traitement du produit correspondant. L'invention n'est pas limitée aux exemples décrits et représentés, car diverses modifications peuvent y être apportées sans sortir de son cadre.

## Revendications

1. Procédé destiné à permettre le traitement de produits (3) par l'intermédiaire de divers appareils électroménagers (1) appartenant à une famille et comportant chacun un ou plusieurs agents de traitement (2) présentant des caractéristiques de traitement différentes d'un appareil à l'autre, chaque agent de traitement (2) étant piloté par l'intermédiaire d'une unité de conversion et de commande (11) délivrant des signaux de commande déterminés par la ou les valeurs d'un paramètre donné de traitement (p) et résultant du décodage d'un code (6), caractérisé en ce qu'il consiste :
- à attribuer, à chaque appareil électroménager (1) faisant partie d'une famille, un coefficient de pondération (Kp) pour chacun des paramètres de traitement, chaque coefficient (Kp) étant déterminé pour pondérer les valeurs du paramètre correspondant, en fonction des caractéristiques techniques des agents de traitement (2) spécifiques à l'appareil,
- à sélectionner un appareil donné (1) pour assurer le traitement du produit (3) considéré,
- à lire le code (6) correspondant au produit (3), en vue de permettre la détermination du ou des paramètres (p) envisagés pour le produit,
- à sélectionner chaque coefficient de pondération (Kp) correspondant au paramètre (p) de traitement envisagé et à l'appareil utilisé (1),
- et à commander chaque agent de traitement (2) par l'intermédiaire de signaux correspondant à la ou aux valeurs du paramètre correspondant, modifiées par le coefficient de pondération correspondant (Kp).

2. Procédé selon la revendication 1, caractérisé en ce qu'il consiste à sélectionner le ou les coefficients de pondération (Kp) correspondant à l'appareil utilisé, en procédant à une scrutation des entrées (I) de l'unité de commande (11), placées chacune par des moyens d'affectation (15), dans un état donné et formant ensemble une combinaison d'adressage des coefficients de l'appareil, préalablement enregistrés dans l'unité de commande (11).

3. Procédé selon la revendication 1, caractérisé en ce qu'il consiste à sélectionner le ou les coefficients de pondération (Kp) correspondant à l'appareil (1) utilisé, en procédant à la lecture d'une memoire (16) reliée à l'unité de commande (11) et contenant le ou les coefficients de pondération spécifiques à l'appareil.

4. Procédé selon la revendication 1, caractérisé en ce qu'il consiste :
a) à compter le nombre N d'informations lues lors de l'opération de lecture du code (6) d'un format n,
b) à déterminer le nombre S de solutions possibles pour retrouver le code (6) de format n, parmi les N informations lues, le nombre de solutions étant S = N - n + 1,
c) à prendre en compte parmi les N informations lues, les n premirères informations, afin de déterminer si la solution de code ainsi formée comporte les éléments d'identification de début et de fin d'un code,
d) à assurer le transcodage de la solutiond de code lorsque celle-ci comporte les éléments d'identification,
e) et, tant que la solution de code ne comporte pas les éléments d'identification et jusqu'au nombre S de possibilités, à continuer à prendre en compte successivement n informations parmi les N informations, en décalant à chaque fois la sélection d'un pas égal à une information.

5. Procédé selon la revendication 4, caractérisé en ce qu'il consiste, lorsque la solution de code ne comporte pas les éléments d'identification au terme de la prise en compte des S solutions possibles :
- à inverser l'ordre des N informations lues,
- et à renouveler les opérations c), d) et e).

6. Circuit universel de commande (11) adapté pour mettre en oeuvre le procédé conforme à l'une des revendications 1 à 5, caractérisé en ce qu'il comporte :
- des moyens (T, 16) de mémorisation du ou des coefficients de pondération (Kp) attribués à au moins un appareil,
- des moyens de sélection du coefficient de pondération (Kp) correspondant à chaque paramètre code (p) et attribué à l'appareil équipé d'un tel circuit (11),
- et des moyens de conversion permettant de pondérer chaque paramètre codé par le coefficient (Kp) correspondant.

7. Circuit universel selon la revendication 6, caractérisé en ce que les moyens de mémorisation sont constitués par une mémoire programmée (16) connectée à un microprocesseur (11').

8. Circuit universel selon la revendication 6, caractérisé en ce que les moyens de mémorisation assurent l'enregistrement du ou des coefficients de pondération (Kp) attribués à plusieurs appareils et sont constitués par une table (T) enregistrée dans un microprocesseur (11').

9. Circuit universel selon la revendication 8, caractérisé en ce que l'unité de commande et de conversion (11) comporte un microprocesseur (11') dont les entrées (I) sont associées à des moyens d'affectation (15) permettant de placer les entrées selon des états donnés formant ensemble une combinaison d'adressage du ou des coefficients correspondant à l'appareil.

10. Appareil électroménager du type comportant, d'une part, des circuits (8, 9) de décodage d'un code enregistré en relation d'un produit à traiter et, d'autre part, un ou plusieurs agents de traitement (2) pilotés par des signaux de commande correspondant aux valeurs de paramètres de traitement (p) caractérisé en ce qu'il est équipé d'un circuit universel de commande (11) conforme à l'une des revendications 6 à 9, connecté aux circuits de décodage (8, 9) et relié à chaque agent de traitement (2) pour les piloter par des signaux de commande.
